# EUROPÄISCHE PATENTANMELDUNG

(11) **EP 4 803 450 A1**
(43) Veröffentlichungstag der Anmeldung: **09.09.2026**
(21) Anmeldenummer: 26154393.8
(22) Anmeldetag: 27.01.2026
(51) Int. Cl.: B65G 21/20, B08B 1/20, B65G 45/22

(54) **VORRICHTUNG UND VERFAHREN ZUM REINIGEN EINES UMLAUFENDEN TRANSPORTBANDES EINER SCHLEIFMASCHINE**

(30) Priorität: 03.03.2025 DE 102025107877
(71) Anmelder: Hans Weber Maschinenfabrik GmbH, 96317 Kronach (DE)
(72) Erfinder: Lang, Andreas, 96328 Küps (DE); Müller, Jürgen, 96277 Schneckenlohe (DE)
(74) Vertreter: Schaumburg und Partner Patentanwälte mbB

(57) **Zusammenfassung**

Bei einer Vorrichtung und einem Verfahren zum Reinigen eines umlaufenden Transportbandes einer Schleifmaschine wird eine Reinigungsflüssigkeit mithilfe einer Applikatorwalze einer Reinigungseinheit auf die Mantelfläche des Transportbands aufgebracht. Nur in einem ersten Betriebszustand kontaktiert die Applikatorwalze das Transportband. Nur in einem zweiten Betriebszustand wird zumindest ein Teil der auf dem Transportband vorhandenen Reinigungsflüssigkeit vom Transportband entfernt.

## Beschreibung

Bei einer Vorrichtung und einem Verfahren zum Reinigen eines umlaufenden Transportbandes einer Schleifmaschine wird mithilfe einer Applikatorwalze eine Reinigungsflüssigkeit auf die Mantelfläche des Transportbands aufgebracht.

Insbesondere in Schleifmaschinen zur Metallbearbeitung werden zum Transport von Werkstücken eingesetzte Transportbänder relativ schnell verschmutzt, so dass die Haftreibung zwischen den auf den Transportbändern zu transportierenden Werkstücken und dem jeweiligen Transportband reduziert ist. Die Verschmutzungen können insbesondere durch bei der vorhergehenden Bearbeitung der Werkstücke genutzte Öle und Fette, Schlackereste und/oder vom Werkstück gelöste Partikel, wie z.B. Schleifstaub oder entfernte Grate, verursacht sein. Durch die schlechtere Haftung der zu bearbeitenden Werkstücke auf verschmutzten Transportbändern können die Werkstücke während der Bearbeitung verrutschen. Hierdurch kann die Bearbeitungsmaschine durch weggeschleuderte Werkstücke oder Teile beschädigt werden und das auf dem Werkstück erzeugte Schliffbild kann dadurch beeinträchtigt werden. Die in bekannten Schleifmaschinen verwendeten Schleifwerkzeuge umfassen insbesondere Schleifbürsten, Schleifvlies, Schleifleinen, Schleifpapier und/oder Abschlagwerkzeuge, insbesondere zum Abschlagen von Schlacke.

Es sind Reinigungssysteme bekannt, die das Band mit heißem Dampf und Hochdruck reinigen. Hierdurch entstehen hohe Energiekosten. Ferner sind diese Reinigungssysteme in der Anschaffung teuer und sehr groß.

Dokument DE 20 2023 103 209 U1 offenbart eine Vorrichtung zur automatisierten Reinigung eines schlaufenförmigen Transportbandes, das in der Metallbearbeitungsindustrie verwendet wird. Die Vorrichtung umfasst ein angetriebenes Reinigungsorgan zur Reinigung des Rücklaufabschnitts des Bands sowie eine Kontroll- und Stelleinrichtung, die eine veränderbare Positionierung des Reinigungsorgans ermöglicht. Zudem sind Systeme zur Befeuchtung und Trocknung integriert. Der Einsatz der Vorrichtung im laufenden Betrieb einer Schleifmaschine kann zu Problemen bei dem sicheren Transport von Werkstücken auf dem Transportband führen.

Es ist Aufgabe der Erfindung, eine Vorrichtung und ein Verfahren zum Reinigen eines umlaufenden Transportbandes einer Schleifmaschine anzugeben, durch die eine einfache und zuverlässige Reinigung des Transportbandes möglich ist.

Diese Aufgabe wird durch eine Vorrichtung mit den Merkmalen des Anspruchs 1 sowie durch ein Verfahren mit den Merkmalen des unabhängigen Verfahrensanspruchs gelöst. Vorteilhafte Weiterbildungen sind in den abhängigen Ansprüchen angegeben.

Durch die Vorrichtung und das Verfahren wird jeweils erreicht, dass eine einfache, effektive und kostengünstige Reinigung des Transportbandes möglich ist. Eine erfindungsgemäße Reinigungseinheit ist kompakt aufgebaut, sodass sie in bekannte Schleifmaschinen einfach integriert werden kann. Es ist nur ein geringer Wartungsaufwand zur Wartung der Reinigungseinheit erforderlich. Die Reinigung des Transportbandes kann insbesondere vollautomatisch, insbesondere in Bearbeitungspausen, in denen keine Werkstücke bearbeitet werden, durchgeführt werden.

Bei Schleifmaschinen, bei denen die Werkstücke mithilfe von Unterdruck auf dem Transportband gehalten werden, kann durch ein regelmäßig gereinigtes Transportband der Einsatz des Unterdrucks entfallen oder der erforderliche Unterdruck kann reduziert werden, so dass die zum Erzeugen des Unterdrucks erforderliche Energie reduziert oder ganz eingespart werden kann.

Es ist vorteilhaft, wenn das erste Mittel ausgebildet ist, zumindest einen Teil der aufgebrachten Reinigungsflüssigkeit bei einer Umlaufbewegung des Transporbands vom Transportband abzuziehen bzw. abzustreifen. Hierdurch kann die Einwirkzeit der Reinigungsflüssigkeit und die Menge der mithilfe der Applikatorwalze aufgebrachten Reinigungsflüssigkeit einfach gesteuert werden. Somit wird das erste Mittel nur alternativ zur Applikatorwalze aktiviert.

Ferner ist es vorteilhaft, wenn in einem Neutralzustand der Reinigungseinheit weder die Applikatorwalze das Transportband kontaktiert noch das erste Mittel Reinigungsflüssigkeit von dem Transportband entfernt. Dieser Neutralzustand ist somit ein dritter Betriebszustand der Vorrichtung. In diesem Neutralzustand kann dann die Bearbeitung der Werkstücke durch die Bearbeitungswerkzeuge der Schleifmaschine erfolgen.

Ferner kann die Vorrichtung ausgebildet sein, die Mantelfläche der Applikatorwalze mit der Mantelfläche des Transportbandes nur in dem ersten Betriebszustand der Vorrichtung in Kontakt zu bringen. Das Transportband und die Applikatorwalze können derart ausgebildet und angeordnet sein, dass das Transportband im ersten Betriebszustand durch die Haftreibung zwischen der Mantelfläche der Applikatorwalze und der Mantelfläche des Transportbandes die Applikatorwalze bei einer Umlaufbewegung des umlaufenden Transportbands antreibt. Hierdurch sind ein kompakter, kostengünstiger und einfacher Aufbau der Reinigungseinheit und ein einfacher Antrieb der Applikatorwalze möglich.

Besonders vorteilhaft ist es, wenn das erste Mittel mindestens ein Blade umfasst, insbesondere ein sogenanntes Airblade bzw. Luftschwert oder eine Abziehklinge. Alternativ oder zusätzlich kann das erste Mittel eine Abziehlippe umfassen. Das Blade und die Abziehlippe sind vorzugsweise jeweils ausgebildet, zumindest einen Teil der auf das Transportband aufgebrachten Reinigungsflüssigkeit abzuziehen. Hierdurch sind ein kompakter, kostengünstiger und einfacher Aufbau der Reinigungseinheit und eine einfache und sichere Entfernung der Reinigungsflüssigkeit vom Transportband möglich.

Ferner kann die Reinigungseinheit mindestens ein zweites Mittel umfassen, das ausgebildet ist, zumindest die Mantelfläche der Applikatorwalze mit der Reinigungsflüssigkeit zu benetzen. Hierdurch ist eine einfache und sichere Zufuhr der Reinigungsflüssigkeit möglich.

Das zweite Mittel kann eine Wanne umfassen, die ausgebildet ist, dass sie zumindest bis zu einem vorbestimmten Füllstand mit Reinigungsflüssigkeit befüllbar ist. Die Wanne und die Applikatorwalze können dabei derart angeordnet und ausgebildet sein, dass die Mantelfläche der Walze bei einer Drehung der Walze durch die in der Wanne befindliche Reinigungsflüssigkeit geführt wird. Hierdurch kann die Mantelfläche der Applikatorwalze einfach mit Reinigungsflüssigkeit benetzt werden.

Ferner können die Wanne und das erste Mittel so angeordnet und ausgebildet sein, dass zumindest ein Teil der von der Mantelfläche des Transportbands entfernten Reinigungsflüssigkeit der Wanne wieder zugeführt wird. Hierdurch ist eine einfache Rückgewinnung der Reinigungsflüssigkeit möglich.

Ferner ist es vorteilhaft, wenn das zweite Mittel eine Sprüheinheit umfasst, die ausgebildet ist, zumindest ein Teil der Mantelfläche der Applikatorwalze mit Reinigungsflüssigkeit zu besprühen. Hierdurch kann die Mantelfläche der Applikatorwalze einfach mit Reinigungsflüssigkeit benetzt werden.

Ferner kann die Vorrichtung eine Schwenkeinheit umfassen, die ausgebildet ist, die Reinigungseinheit um eine Drehachse in mindestens zwei Schwenkpositionen zu verschwenken. Hierdurch kann zum Aktivieren des ersten Betriebszustandes der Vorrichtung die Schwenkeinheit in eine erste Schwenkposition geschwenkt werden, in der die Applikatorwalze das Transportband kontaktiert. Zum Aktivieren des zweiten Betriebszustandes der Vorrichtung kann die Schwenkeinheit in eine zweite Schwenkposition verschwenkt werden, in der das erste Mittel zumindest einen Teil der auf dem Transportband vorhandenen Reinigungsflüssigkeit vom Transportband entfernt. Hierdurch sind ein einfacher Aufbau der Vorrichtung und ein einfacher Wechsel der Betriebszustände möglich.

Die Schwenkeinheit ist vorzugsweise ausgebildet, in einem dritten Betriebszustand der Vorrichtung die Reinigungseinheit in eine dritte Schwenkposition zu verschwenken, in der weder die Walze noch das erste Mittel der Reinigungseinheit die Mantelfläche des Transportbands kontaktieren. Die Vorrichtung befindet sich somit im ersten und zweiten Betriebszustand in einem Reinigungsmodus der Schleifmaschine und im dritten Betriebszustand in einem Bearbeitungs- bzw. Schleifmodus. Die Schwenkeinheit kann manuell durch eine Bedienperson oder mithilfe einer vorzugsweise elektrischen oder pneumatischen Antriebseinheit angetrieben werden. Hierdurch ist ein einfacher Aufbau und eine einfache und vorzugsweise automatisch Aktivierung des ersten und zweiten Betriebszustands möglich. Besonders vorteilhaft ist es, zwei in Reihe geschaltete Pneumatikzylinder vorzusehen, die einfach so ansteuerbar sind, dass die Reinigungseinheit einfach in drei Schwenkpositionen verschwenkt werden kann.

Ein zweiter Aspekt betrifft eine Anordnung zum Reinigen eines umlaufenden Transportbandes einer Schleifmaschine. Die Anordnung umfasst eine Vorrichtung nach Anspruch 1 oder einer zuvor oder in den abhängigen Ansprüchen angegebenen Weiterbildungen und ein endloses um mindestens zwei Umlenkwalzen geführten Transportband. Die Umlenkwalzen und das Transportband bilden eine Transporteinheit zum Transport mindestens eines Werkstücks in einer Transportrichtung. Die Werkstücke werden beim Transport mithilfe des Transportbands durch die Schleifmaschine bearbeitet. Hierzu liegt das Werkstück beim Transport auf der durch die Mantelfläche des Transportbands gebildeten Oberseite der Transporteinheit auf. Vorzugsweise sind die Applikatorwalze und das erste Mittel an einer Unterseite der Transporteinheit, d.h. der Mantelfläche des Transportbands gegenüberliegend angeordnet. Hierdurch ist ein kompakter Aufbau der Anordnung und der gesamten Schleifmaschine möglich.

Vorteilhaft ist es, wenn die Anordnung eine Unterdruckeinheit umfasst, die ausgebildet ist, einen Unterdruck an einer der Mantelfläche gegenüberliegenden Innenseite des Transportbandes entlang zumindest eines Teils einer Transportstrecke derart zu applizieren, dass eine Kraft auf ein auf einer Oberseite der Transportvorrichtung angeordnetes Werkstück in Richtung der Mantelfläche des Transportbands wirkt. Hierdurch wird das Werkstück durch die Kraft gegen die Mantelfläche gezogen, so dass es sicher auf dem Transportband platziert ist und so beim Transport sicher bearbeitet werden kann.

Vorzugsweise ist Drehachse der Schwenkeinheit parallel zur Drehachse zumindest einer der Umlenkrollen. Hierdurch sind ein einfacher Aufbau und ein sicherer Betrieb der Reinigungseinheit und der gesamten Anordnung möglich.

Weiterhin ist es vorteilhaft, wenn die Anordnung eine Überwachungseinheit umfasst, die ausgebildet ist, beim Transport des Werkstücks eine Verschiebung des Werkstücks auf dem Transportband zu detektieren. Bei einer detektieren Verschiebung kann die Anordnung eine Information mit einer Empfehlung zum Anschwenken der Applikatorwalze und nachfolgendem Aktivieren des ersten Mittels an eine Bedienperson ausgeben. Alternativ oder zusätzlich und/oder ein Reinigungsprozess bei einer nachfolgenden Betriebsunterbrechung automatisch durchgeführt werden. Hierzu kann zum Aufbringen der Reinigungsflüssigkeit die Applikatorwalze an das Transportband angeschwenkt werden, währenddessen das Transportband mindestens eine Umdrehung, vorzugsweise mindestens zwei Umdrehungen, beispielsweise drei oder vier Umdrehungen, angetrieben wird. Zum Entfernen der dann auf dem Transportband befindlichen Reinigungsflüssigkeit wird die Applikatorwalze abgeschwenkt und das erste Mittel aktiviert, beispielsweise das Blade oder die Abziehlippe an das Transportband angeschwenkt, währenddessen das Transportband mindestens eine Umdrehung, vorzugsweise mindestens zwei Umdrehungen, angetrieben wird. Hierdurch ist ein einfacher Reinigungsprozess möglich, der die Bearbeitung von Werkstücken nicht beeinflusst, da die Reinigung vorzugsweise in einer Betriebsunterbrechung der Schleifmaschine durchgeführt wird.

Das Verfahren mit den Merkmalen des unabhängigen Verfahrensanspruchs hat dieselben Vorteile wie die beanspruchte Vorrichtung. Insbesondere kann das Verfahren mit den Merkmalen der auf die Vorrichtung gerichteten abhängigen Ansprüche und der zuvor genannten Weiterbildungen weitergebildet werden.

Ausführungsbeispiele werden im Folgenden anhand der Figuren näher erläutert. Darin zeigen:
- Figur 1: eine schematische Seitenansicht einer Schleifmaschine mit einer Vorrichtung zum Reinigen eines Transportbands der Schleifmaschine,
- Figur 2: eine schematische perspektivische Darstellung der Vorrichtung zum Reinigen des Transportbands nach Figur 1,
- Figur 3: eine schematische Seitenansicht einer Anordnung der Vorrichtung zum Reinigen des Transportbands nach den Figuren 1 und 2 in einer Neutralstellung und eines Abschnitts des Transportbands;
- Figur 4: eine schematische Seitenansicht der Anordnung nach Figur 3, wobei die Vorrichtung zum Reinigen des Transportbands in einem ersten Betriebszustand dargestellt ist,
- Figur 5: eine schematische Seitenansicht der Anordnung nach Figur 3 und 4, wobei die Vorrichtung zum Reinigen des Transportbands in einem zweiten Betriebszustand dargestellt ist, und
- Figur 6: eine schematische Schnittdarstellung der Anordnung nach Figur 3.

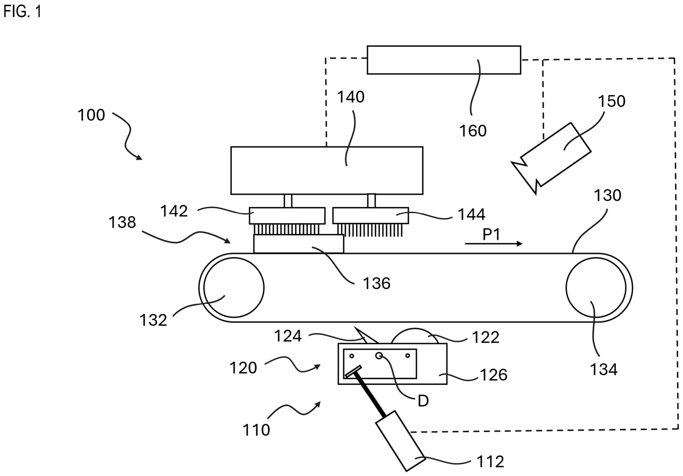

Figur 1 zeigt eine schematische Seitenansicht einer Schleifmaschine 100 mit einer Vorrichtung 110 zum Reinigen eines Transportbands 130 der Schleifmaschine 100. Das Transportband 130 ist als umlaufendes Transportband 130 ausgeführt, das um eine erste Umlenkwalze 132 und eine zweite Umlenkwalze 134 geführt ist. Das Transportband 130 wird mithilfe einer nicht dargestellten Antriebseinheit in Richtung des Pfeils P1 angetrieben. Ein auf der Oberseite des Transportbands 130 aufliegendes Werkstück 136 wird entlang einer durch das Transportband 130 bereitgestellten Transportstrecke 138 unterhalb einer Schleifeinheit 140 zur Bearbeitung durch die Schleifeinheit 140 in der Transportrichtung P1 transportiert. Die Schleifeinheit 140 kann einen Schleifbalken mit Schleifwerkzeugen 142, 144 umfassen, der so angeordnet ist, dass der Abstand zwischen Schleifwerkzeugen 142, 144 und der Oberseite des Transportbands 130 veränderbar und insbesondere an die Dicke der zu bearbeitenden Werkstücke 136 anpassbar ist.

Die Schleifwerkzeuge 142, 144 können in bekannter Weise Bürsten und/oder Schleifbänder und/oder Abschlagwerkzeuge und/oder Schleifvlies und/oder Schleifleinen und/oder Schleifpapier umfassen. Beispielsweise können die Schleifwerkzeuge 142, 144 über einen oder mehrere Planetenköpfe und eine Antriebseinheit, wie einem Elektromotor, angetrieben sein.

Das Werkstück 136 ist vorzugsweise ein metallisches Werkstück 136 und die Schleifmaschine 100 eine Schleifmaschine 100 zur Metallbearbeitung. Die zum Transport von Werkstücken 136 in der Schleifmaschine 100 zur Metallbearbeitung eingesetzten Transportbänder 130 werden relativ schnell verschmutzt, so dass die Haftreibung zwischen den auf den Transportbändern 130 zu transportierenden Werkstücken 136 und dem jeweiligen Transportband 130 reduziert ist. Die Verschmutzungen können insbesondere durch bei der vorhergehenden Bearbeitung der Werkstücke 136 genutzte Öle und Fette, Schlackereste und/oder vom Werkstück 136 gelöste Partikel, wie z.B. Schleifstaub oder entfernte Grate, verursacht sein. Durch die schlechtere Haftung des zu bearbeitenden Werkstücks 136 auf dem verschmutzten Transportband 130 kann das Werkstück 136 während der Bearbeitung mit den Schleifwerkzeugen 142, 144 verrutschen. Hierdurch kann die Schleifmaschine 100 durch ein weggeschleudertes Werkstück 136 beschädigt werden und/oder das auf dem Werkstück 136 erzeugte Schliffbild kann durch die Verschiebung beeinträchtigt werden. Somit ist die regelmäßige Reinigung des Transportbands wichtig.

Die in der Schleifmaschinen 100 verwendeten Schleifwerkzeuge umfassen insbesondere Schleifbürsten, Schleifvlies, Schleifleinen, Schleifpapier und/oder Abschlagwerkzeuge, insbesondere zum Abschlagen von Schlacke.

Optional wird bei anderen Schleifmaschinen das zu bearbeitende Werkstück 136 mithilfe von Unterdruck auf dem Transportband 130 gehalten, um ein Verrutschen auf dem Transportband 130 während des Schleifens zu vermeiden. Durch ein regelmäßig gereinigtes Transportband 130 kann jedoch der Einsatz des Unterdrucks entfallen oder der erforderliche Unterdruck kann reduziert werden, so dass die zum Erzeugen des Unterdrucks erforderliche Energie reduziert oder ganz eingespart werden kann.

Bei der Schleifmaschine 100 dient die Vorrichtung 110 zum Reinigen des Transportbandes 130. Die Vorrichtung 110 umfasst eine Reinigungseinheit 120, die um eine Drehachse D schwenkbar angeordnet ist. Mithilfe einer Antriebseinheit 112 der Vorrichtung 110 ist die Reinigungseinheit 120 in mehrere Betriebspositionen schwenkbar.

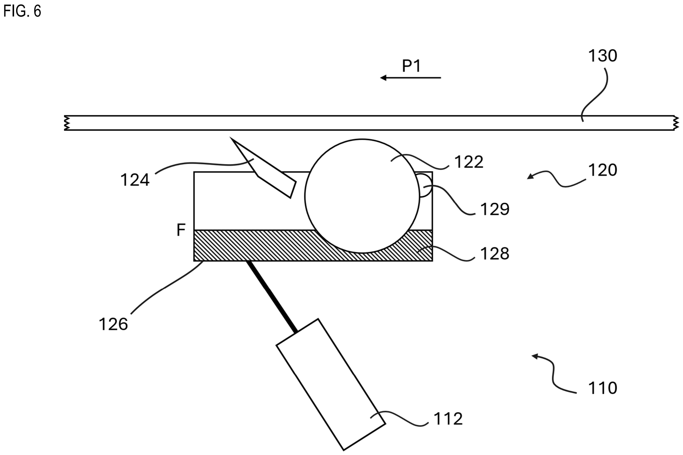

Die Reinigungseinheit 120 umfasst eine Applikatorwalze 122 zum Applizieren einer Reinigungsflüssigkeit auf das Transportband 130 und ein Abziehelement 124 zum Entfernen von auf der Mantelfläche des Transportbands 130 vorhandenen Reinigungsflüssigkeit und auf der Mantelfläche vorhandenen Schmutzpartikeln. Die Reinigungseinheit 120 umfasst weiterhin eine Wanne 126, die zumindest teilweise mit Reinigungsflüssigkeit gefüllt ist. In der in Figur 6 gezeigten Schnittdarstellung ist die Wanne 126 bis zum Füllstand F mit Reinigungsflüssigkeit 128 gefüllt. Die Applikatorwalze 122 taucht zumindest zum Teil in die in der Wanne 126 befindliche Reinigungsflüssigkeit 128 ein, so dass die Mantelfläche der Applikatorwalze 122 bei einer Drehung in Drehrichtung P2 der Applikatorwalze 122 mit Reinigungsflüssigkeit 128 benetzt wird.

Wenn in einem ersten Betriebszustand der Vorrichtung 110 zum Reinigen des Transportbandes 130 die Reinigungseinheit 120 so verschwenkt wird, dass die Mantelfläche der Applikatorwalze 122 bei einer Umlaufbewegung des Transportbands 130 in Kontakt mit der Mantelfläche des Transportbands 130 gebracht wird.

Hierdurch wird die Applikatorwalze 122 durch das Transportband 130 angetrieben und die mit Reinigungsflüssigkeit 128 benetzte Mantelfläche der Applikatorwalze 122 gelangt bei einer Drehung in Drehrichtung P2 in Kontakt mit der Mantelfläche des Transportbands 130. Hierbei wird zumindest ein Teil der Reinigungsflüssigkeit 128 von der Applikatorwalze 122 auf die Mantelfläche des Transportbandes 130 übertragen. Das Übertragen der Reinigungsflüssigkeit 128 kann für mindestens zwei vollständige Umläufe des Transportbands 130 erfolgen. Bei anderen Ausführungsformen kann das Übertragen der Reinigungsflüssigkeit 128 auch nur für eine oder drei oder vier vollständige Umdrehungen des Transportbands 130 erfolgen. Bei anderen Ausführungsformen umfasst die äußere die Mantelfläche der Applikatorwalze 122 bildende Schicht ein saugfähiges Material, insbesondere einen offenporigen Kunststoff, ein schwammartiges Material und/oder Moosgummi, oder eine zum Transport von Reinigungsflüssigkeit geeignete Oberflächenstruktur, wie z.B. eine durch Rändelung erzeugte Oberflächenstruktur.

Nachdem die Reinigungsflüssigkeit 128 auf das Transportband 130 übertragen worden ist, wird die Reinigungseinheit 120 in einem weiteren zweiten Betriebszustand der Vorrichtung 110 zum Reinigen des Transportbands 130 derart verschwenkt, dass das Abziehelement 124 in Kontakt mit der Mantelfläche des Transportbandes 130 gebracht und zumindest ein Teil der auf der Mantelfläche des Transportbands 130 vorhandenen Reinigungsflüssigkeit 128 und auf der Mantelfläche vorhandene Schmutzpartikel von der Mantelfläche abgezogen werden. Das Abziehelement 124 und die Wanne 126 sind derart angeordnet, dass zumindest ein Teil der abgezogenen Reinigungsflüssigkeit 128 zurück in die Wanne 126 gelangt. Bei anderen Ausfürungsformen kann eine separate Wanne vorgesehen sein, die so ausgebildet und angeordnet ist, das in diese Wanne zumindest ein Teil der abgezogenen Reinigungsflüssigkeit gelant. Das Abziehen der Reinigungsflüssigkeit 128 kann für mindestens eine vollständige Umdrehung des Transportbands 130 erfolgen. Bei anderen Ausführungsformen kann das Entfernen der Reinigungsflüssigkeit 128 auch für mehr als einen Umlauf, insbesondere für zwei oder drei oder vier vollständige Umläufe, durchgeführt werden.

Der erste Betriebszustand und der zweite Betriebszustand werden vorzugsweise nacheinander durchgeführt und nicht gleichzeitig. Dadurch kann die übertragene Reinigungsflüssigkeit 128 einwirken und die Verschmutzungen lösen, bevor die Reinigungsflüssigkeit 128 wieder vom Transportband 130 entfernt wird. Da die Reinigungsflüssigkeit 128 auch die Haftreibung zwischen Werkstück 136 und Transportband 130 herabsetzt wird der Reinigungsvorgang mit der Aktivierung des ersten Betriebszustands und der Aktivierung des zweiten Betriebszustands in einer Bearbeitungspause der Schleifmaschine 100 durchgeführt. Nach Beendigung des Reinigungsvorgangs kann in die Reinigungseinheit 120 in einem dritten Betriebszustand der Vorrichtung 110 mithilfe der Antriebseinheit 112 so geschwenkt werden, dass weder die Applikatorwalze 122 noch das Abziehelement 124 die Mantelfläche des Transportbandes 130 kontaktieren. Dieser dritte Betriebszustand wird auch als Neutralzustand der Vorrichtung 110 bezeichnet. Die Reinigungseinheit 130 befindet sich dabei in einer sogenannten Neutralposition. In dem dritten Betriebszustand der Vorrichtung 110 kann die Schleifmaschine 100 auf dem Transportband 130 aufliegende und mithilfe der Transporteinheit in Transportrichtung P1 transportierte Werkstücke 136 bearbeiten.

Bei dieser Ausführungsform umfasst das Abzugselement 124 mindestens eine Gummilippe. Die Gummilippe kann sich der Mantelfläche des Transportbands 130 gut anpassen und wirkungsvoll die auf der Mantelfläche des Transportbandes 130 befindliche Reinigungsflüssigkeit sowie dort befindliche Schmutzpartikel entfernen.

Bei dieser Ausführungsform ist die Antriebseinheit 112 eine elektrische Antriebseinheit, insbesondere ein Elektromotor, wie ein Linearmotor oder ein Schrittmotor. Bei anderen Ausführungsformen kann die Antriebseinheit 112 auch als pneumatische oder hydraulische Antriebseinheit ausgeführt sein. Besonders vorteilhaft ist es, zwei in Reihe geschaltete Pneumatikzylinder vorzusehen, die durch die Steuereinheit 160 einfach so ansteuerbar sind, dass die Reinigungseinheit 120 einfach in drei Schwenkpositionen verschwenkt werden kann.

Bei anderen Ausführungsformen kann das Abzugselement auch eine Metallklinge umfassen oder ein Luftschwert, ein sogenannten Airblade umfassen. Das Gebläse und die Düsenanordnung zum Erzeugen des Airblades können auch ortsfest angeordnet, d.h. nicht mit der Wanne 126 und der Applikatorwalze 122 verschwenkt werden.

Der Reinigungsvorgang kann bei anderen Ausführungsformen auch parallel zur Bearbeitung der Werkstücke 136 durch die Schleifmaschine 100, d.h. während des Schleifbetriebs, durchgeführt werden.

Die Reinigungsflüssigkeit 128 umfasst insbesondere Wasser, vorzugsweise mit Additiven, insbesondere mit fettlösenden Additiven. Eine geeignete Reinigungsflüssigkeit 128 wird von der Anmelderin unter der Bezeichnung ProClean vertrieben. Bei anderen Ausführungsformen können auch andere Reinigungsflüssigkeiten, insbesondere auf Nitrobasis, wie z.B. Nitro-Verdünnung, eingesetzt werden.

Bei anderen Ausführungsformen umfasst die Wanne 126 einen Ablasshahn und vorzugsweise einen Ablassstutzen zum leichten Entfernen der Reinigungsflüssigkeit 128, insbesondere von verschmutzter Reinigungsflüssigkeit 128 aus der Wanne 126. Zusätzlich oder alternativ kann ein Befüllstutzen zum einfachen Befüllen der Wanne 126 mit Reinigungsflüssigkeit 128 vorgesehen sein, über den Reinigungsflüssigkeit 128 einfach in die Wanne 126 gefüllt werden kann.

Die Vorrichtung 110 umfasst ferner ein Überwachungsmittel zum Überwachen der Verschmutzung des Transportbandes 130 und/oder zum Überwachen der Lage der Werkstücke 136 auf dem Transportband 130 bei der Bearbeitung der Werkstücke 136. Bei einer Verschiebung der Werkstücke 136 bei der Bearbeitung durch die Schleifmaschine 100 kann auf eine Verschmutzung des Transportbandes 130 geschlossen werden.

Das Überwachungsmittel kann insbesondere eine Kamera 150 und eine Steuereinheit 160 zum Verarbeiten der Bilddaten der mithilfe der Kamera 150 aufgenommenen Bilder umfassen. Die Steuereinheit 160 kann bei der Verarbeitung der Bilddaten insbesondere durch einen Mustervergleich oder den Einsatz künstlicher Intelligenz den Verschmutzungsgrad des Transportbands 130 ermitteln und bei Überschreitung einer tolerierten Verschmutzung des Transportbands 130 den Reinigungsvorgang aktivieren, und diesen insbesondere in einer Bearbeitungspause, in der keine Werkstücke 136 durch die Schleifmaschine 100 bearbeitet werden, durchführen. Auch kann die Steuereinheit 160 ausgehend von den Bilddaten der Kamera 150 die Lage der Werkstücke 136 bei dem Transport auf dem Transportband 130 und bei der Bearbeitung durch die Schleifmaschine 100 erfassen und prüfen, ob die Lage des Werkstücks 136 auf dem Transportband 130 beim Transport in Transportrichtung P1 unverändert ist. Ferner dient die Steuereinheit 160 zum Steuern der Schleifeinheit 140 und zum Steuern der Antriebseinheit 112. Weiterhin dient die Steuereinheit 160 zum Steuern einer Antriebseinheit zum Antrieb des Transportbandes 130.

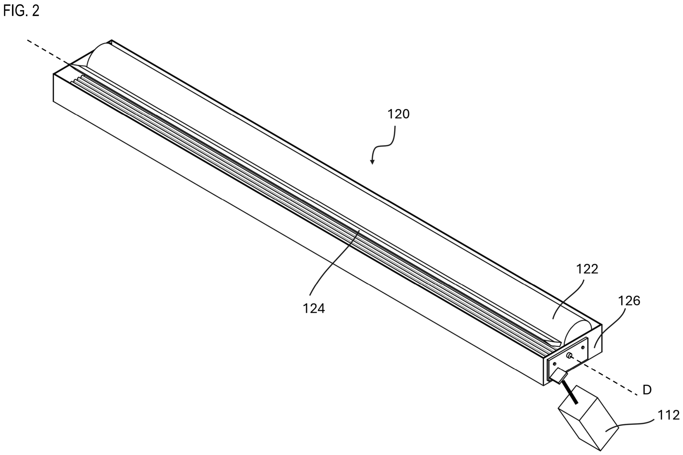

Figur 2 zeigt eine schematische perspektivische Darstellung der Vorrichtung 110 zum Reinigen des Transportbands 120 nach Figur 1. Elemente mit gleichem Aufbau oder gleicher Funktion haben dieselben Bezugszeichen. Die Reinigungseinheit 120 kann einfach seitlich, d.h. in einer Draufsicht quer zur Transportrichtung P1 aus der Schleifmaschine 100 entfernt werden. Hierzu kann die Reinigungseinheit 120 auf nicht dargestellten Führungsschienen aus der Schleifmaschine 100 herausgezogen und auch wieder in die Schleifmaschine 100 hineingeschoben werden. Hierdurch ist ein einfaches Entfernen und Wiedereinbringen der Reinigungseinheit 120 möglich.

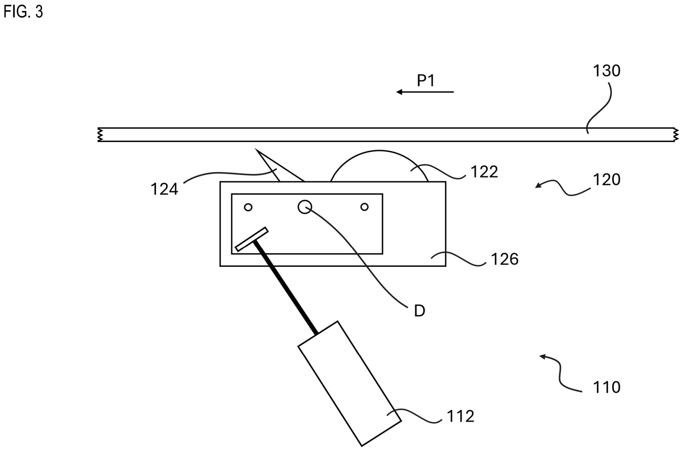

Figur 3 zeigt eine schematische Seitenansicht einer Anordnung der Vorrichtung 110 zum Reinigen des Transportbands 130 nach den Figuren 1 und 2 und eines Abschnitts des Transportbands 130. Wie bereits erwähnt befindet sich in dem Neutralzustand (dritter Betriebszustand) der Vorrichtung 110 die Reinigungseinheit 120 in einer Neutralposition, in der weder die Applikatorwalze 122 noch das Abzugselement 124 die Mantelfläche des Transportbands 130 berühren. Diese Neutralposition hat die Reinigungseinheit 120 insbesondere während der Bearbeitung von Werkstücken 136 durch die Schleifeinheit 140 und auch in Bearbeitungspausen, in denen keine Reinigung des Transportbands 130 durchgeführt wird.

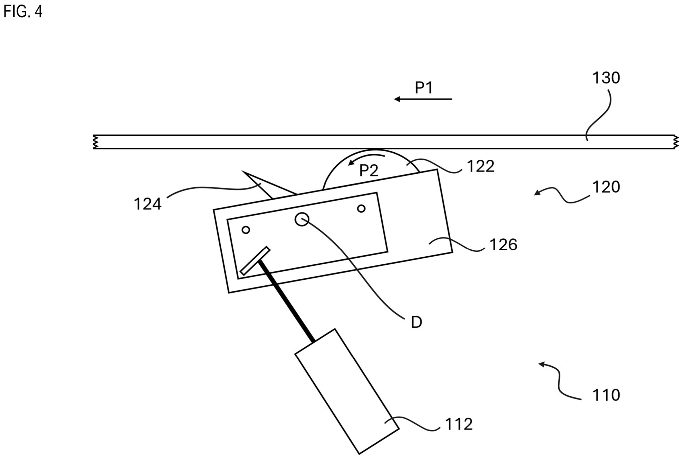

Figur 4 zeigt eine schematische Seitenansicht der Anordnung nach Figur 3, wobei die Vorrichtung 110 zum Reinigen des Transportbands 130 in einem ersten Betriebszustand dargestellt ist. Dieser erste Betriebszustand der Vorrichtung 110 wird zur Reinigung des Transportbandes 130 aktiviert. Hierzu wird die Antriebseinheit 112 durch die Steuereinheit 160 derart angesteuert, dass die Reinigungseinheit 120 von der in Figur 3 gezeigten Neutalposition in eine erste Schwenkposition verschwenkt wird, in der die Applikatorwalze 122 so angeordnet ist, dass die Mantelfläche der Applikatorwalze 122 gegen die Mantelfläche des Transportbandes 130 gedrückt wird und das umlaufende Transportband 130 in Richtung P1 angetrieben wird. Duch die Haftreibung zwischen den Mantelflächen wird die Applikatorwalze 122 in Drehrichtung P2 angetrieben. Die Applikatorwalze 122 bringt bei einer Umdrehung in Drehrichtung P2 Reinigungsflüssigkeit 128 aus der Wanne 126 in Kontakt mit der Mantelfläche des Transportbandes 130, wobei zumindest ein Teil dieser Reinigungsflüssigkeit 128 auf das Transportband 130 aufgebracht wird. Die auf das Transportband 130 aufgebrachte Reinigungsflüssigkeit 128 verbleibt dort vorzugsweise für zwei oder mehr Umläufe des Transportbands 130, so dass an jeder Stelle des Transportbands 130 mindestens zwei Mal Reinigungsflüssigkeit 128 aufgetragen wird und für eine sich aus der Umlaufgeschwindigkeit und Länge des Transportbands 130 ergebenden Einwirkzeit einwirken kann.

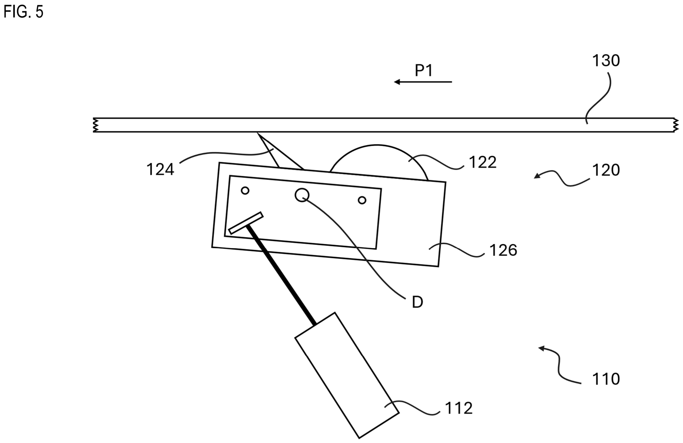

Figur 5 zeigt eine schematische Seitenansicht der Anordnung nach Figur 3 und 4, wobei die Vorrichtung 110 zum Reinigen des Transportbands 130 in einem zweiten Betriebszustand dargestellt ist. Dieser zweite Betriebszustand der Vorrichtung 110 wird zur Reinigung des Transportbandes 130 nach Beendigung des ersten Betriebszustands aktiviert. Hierzu wird die Antriebseinheit 112 durch die Steuereinheit 160 derart angesteuert, dass die Reinigungseinheit 120 von der in Figur 4 gezeigten ersten Schwenkposition in eine zweite Schwenkposition verschwenkt wird, in der das Abziehelement 124 so angeordnet ist, dass das Abziehelement 124 gegen die Mantelfläche des Transportbandes 130 gedrückt wird und das umlaufende Transportband 130 in Richtung P1 für mindestens einen Umlauf angetrieben wird. Das Abziehelement 124 entfernt auf der Mantelfläche des Transportband 130 vorhandene Reinigungsflüssigkeit 128 und evtl. auf der Mantelfläche vorhandene oder in der Reinigungsflüssigkeit 128 aufgenommene Schmutzpartikel. Dadurch wird jede Stelle des Transportbands 130 mindestens einmal mithilfe des Abziehelements 124 abgezogen.

Figur 6 zeig eine schematische Schnittdarstellung der Anordnung nach Figur 3. Die Wanne 126 ist bis zu einem Füllstand F mit Reinigungsflüssigkeit 128 gefüllt. Ferner umfasst in diesem Ausführungsbeispiel die Reinigungseinheit 120 ein Abstreifelement 129, das die Menge der auf die Mantelfläche des Transportbandes 130 mithilfe der Applikatorwalze 122 übertragenen Reinigungsflüssigkeit 128 begrenzt. Bei anderen Ausführungsformen wird auf das Abstreifelement 129 verzichtet. Bei dieser Ausführungsform kann der Füllstand F über ein Schauglas in der Wanne 126 eingesehen werden. Dadurch kann eine Bedienperson einfach den Füllstand F insbesondere beim Einfüllen von Reinigungsflüssigkeit 128 prüfen.

Bei Ausführungsformen ist auch ein automatisches Befüllen der Wanne 126 möglich, sodass das manuelle Befüllen, die Füllstandsüberwachung und das Entleeren durch eine Bedienperson entfallen.

Auch sind Ausführungsformen möglich, bei denen durch weitere Trocknungsmaßnahmen auch während des Schleifprozesses gereinigt werden kann, sodass keine Unterbrechung des Schleifprozesses zur Reinigung erforderlich sind. Bei einer solchen Ausführungsform ist ein Abstand zwischen der Applikatorwalze und dem Abziehelement im Bereich von beispielsweise 30 cm bis 100 cm vorteilhaft.

### Bezugszeichenliste

- 100: Schleifmaschine
- 110: Vorrichtung
- 112: Antriebseinheit
- 120: Reinigungseinheit
- 122: Applikatorwalze
- 124: Abziehelement
- 126: Wanne
- 128: Reinigungsflüssigkeit
- 129: Abstreifelement
- 130: Transportband
- 132, 134: Umlenkwalze
- 136: Werkstück
- 140: Schleifeinheit
- 142, 144: Schleifwerkzeug
- 150: Kamera
- 160: Steuereinheit

- F: Füllstand
- D: Drehachse
- P1: Transportrichtung
- P2: Drehrichtung

## Patentansprüche

1. Vorrichtung zum Reinigen eines umlaufenden Transportbandes einer Schleifmaschine,
mit einer Reinigungseinheit (120), die eine Applikatorwalze (122) umfasst, die ausgebildet ist, eine Reinigungsflüssigkeit (128) auf die Mantelfläche des Transportbands (130) aufzubringen, und
die ein erstes Mittel (124) umfasst, das ausgebildet ist, zumindest einen Teil der auf dem Transportband (130) vorhandenen Reinigungsflüssigkeit (128) vom Transportband (130) zu entfernen,
**dadurch gekennzeichnet,**
**dass** die Vorrichtung (110) derart ausgebildet ist, dass nur in einem ersten Betriebszustand der Vorrichtung (110) die Applikatorwalze (122) das Transportband (130) kontaktiert, und
**dass** die Vorrichtung (110) derart ausgebildet ist, dass nur in einem zweiten Betriebszustand das erste Mittel (124) zumindest einen Teil der auf dem Transportband (130) vorhandenen Reinigungsflüssigkeit (128) vom Transportband (130) entfernt.

2. Vorrichtung nach Anspruch 1, wobei das erste Mittel (124) ausgebildet ist, zumindest einen Teil der aufgebrachten Reinigungsflüssigkeit (128) bei einer Umlaufbewegung des Transportbands (130) vom Transportband (130) abzuziehen oder abzustreifen oder anzublasen.

3. Vorrichtung nach einem der vorhergehenden Ansprüche, wobei die Vorrichtung ausgebildet ist, die Mantelfläche der Applikatorwalze (124) mit der Mantelfläche des Transportbandes (130) nur in dem ersten Betriebszustand der Vorrichtung (110) in Kontakt zu bringen, wobei das Transportband (130) und die Applikatorwalze (122) vorzugsweise derart ausgebildet und angeordnet sind, dass das Transportband (130) im ersten Betriebszustand durch die Haftreibung zwischen der Mantelfläche der Applikatorwalze (122) und der Mantelfläche des Transportbandes (130) die Applikatorwalze (122) bei einer Umlaufbewegung des umlaufenden Transportbands (130) antreibt.

4. Vorrichtung nach einem der vorhergehenden Ansprüche, wobei das erste Mittel (124) mindestens ein Blade umfasst, insbesondere ein Airblade oder eine Abziehklinge, und /oder eine Abziehlippe, die jeweils ausgebildet sind, zumindest einen Teil der auf das Transportband (130) aufgebrachten Reinigungsflüssigkeit (128) zu entfernen.

5. Vorrichtung nach einem der vorhergehenden Ansprüche, wobei die Reinigungseinheit (120) mindestens ein zweites Mittel (126) umfasst, das ausgebildet ist, zumindest die Mantelfläche der Applikatorwalze (122) mit der Reinigungsflüssigkeit (128) zu benetzen.

6. Vorrichtung nach einem der vorhergehenden Ansprüche, wobei das zweite Mittel eine Wanne (126) umfasst, die ausgebildet ist, dass sie zumindest bis zu einem vorbestimmten Füllstand (F) mit Reinigungsflüssigkeit (128) befüllbar ist,
wobei die Wanne (126) und die Applikatorwalze (122) vorzugsweise derart angeordnet und ausgebildet sind, dass die Mantelfläche der Applikatorwalze (122) bei einer Drehung (P2) der Applikatorwalze (122) durch die in der Wanne (126) befindliche Reinigungsflüssigkeit (128) geführt wird.

7. Vorrichtung nach Anspruch 6, wobei die Wanne (126) und das erste Mittel (124) so angeordnet und ausgebildet sind, zumindest einen Teil der von der Mantelfläche des Transportbands (130) entfernten Reinigungsflüssigkeit (128) der Wanne (126) zuzuführen.

8. Vorrichtung nach einem der vorhergehenden Ansprüche, wobei das zweite Mittel eine Sprüheinheit umfasst, die ausgebildet ist, zumindest ein Teil der Mantelfläche der Applikatorwalze (122) mit Reinigungsflüssigkeit (128) zu besprühen.

9. Vorrichtung nach einem der vorhergehenden Ansprüche, wobei die Vorrichtung (110) eine Schwenkeinheit (112) umfasst, die ausgebildet ist, die Reinigungseinheit (120) um eine Drehachse (D) in mindestens zwei Schwenkpositionen zu verschwenken.

10. Vorrichtung nach Anspruch 9, wobei die Schwenkeinheit (112) ausgebildet ist, im ersten Betriebszustand die Reinigungseinheit (120) in die erste Schwenkposition zu verschwenken, in der die Applikatorwalze (122) die Mantelfläche des Transportbands (130) kontaktiert, und
wobei die Schwenkeinheit (112) ausgebildet ist, in dem zweiten Betriebszustand die Reinigungseinheit (120) in die zweite Schwenkposition zu verschwenken, in der das erste Mittel die Mantelfläche des Transportbands (130) kontaktiert.

11. Vorrichtung nach Anspruch 9 oder 10, wobei die Schwenkeinheit ausgebildet ist, in einem dritten Betriebszustand der Vorrichtung (110) die Reinigungseinheit (120) in eine dritte Schwenkposition zu verschwenken, in der weder die Applikatorwalze (122) noch das erste Mittel (124) der Reinigungseinheit (120) die Mantelfläche des Transportbands (130) kontaktieren.

12. Anordnung zum Reinigen eines umlaufenden Transportbandes einer Schleifmaschine
mit einer Vorrichtung (110) nach einem der vorhergehenden Ansprüche und einem endlosen um mindestens zwei Umlenkwalzen geführten Transportband (130), wobei die Umlenkwalzen (132, 134) und das Transportband (130) eine Transporteinheit zum Transport mindestens eines Werkstücks (136) in einer Transportrichtung (P1) bilden,
und wobei die Applikatorwalze (122) und das erste Mittel (124) an einer Unterseite der Transporteinheit angeordnet sind.

13. Anordnung nach Anspruch 12, wobei die Anordnung eine Unterdruckeinheit umfasst, die ausgebildet ist, einen Unterdruck an einer der Mantelfläche gegenüberliegenden Innenseite des Transportbandes (130) entlang zumindest eines Teils einer Transportstrecke derart zu applizieren, dass eine Kraft auf ein auf einer Oberseite der Transportvorrichtung angeordnetes Werkstück (136) in Richtung der Mantelfläche des Transportbands (130) wirkt.

14. Anordnung nach Anspruch 12 oder 13, wobei die Anordnung eine Überwachungseinheit (150, 160) umfasst, die ausgebildet ist, beim Transport des Werkstücks (136) eine Verschiebung des Werkstücks (136) auf dem Transportband (130) zu detektieren und bei einer detektieren Verschiebung eine Information mit einer Empfehlung zum Aktivieren der Reinigungseinheit (120) zu erzeugen.

15. Verfahren zum Reinigen eines umlaufenden Transportbandes einer Schleifmaschine,
bei dem eine Reinigungsflüssigkeit (128) mithilfe einer Applikatorwalze (122) einer Reinigungseinheit (126) auf die Mantelfläche des Transportbands (130) aufgebracht wird,
bei dem zumindest einen Teil der auf dem Transportband (130) vorhandenen Reinigungsflüssigkeit (128) vom Transportband (130) entfernt wird, **dadurch gekennzeichnet,**
**dass** das Transportband (130) nur in einem ersten Betriebszustand von der Applikatorwalze (122) kontaktiert wird, und
**dass** nur in einem zweiten Betriebszustand zumindest ein Teil der auf dem Transportband (130) vorhandenen Reinigungsflüssigkeit (128) vom Transportband (130) entfernt wird.
